# EUROPÄISCHE PATENTANMELDUNG

(11) **EP 1 172 338 A1**
(43) Veröffentlichungstag der Anmeldung: **16.01.2002**
(21) Anmeldenummer: 01113864.1
(22) Anmeldetag: 07.06.2001
(51) Int. Cl.: C03B 13/14, C03B 11/06, C03B 13/16, C03B 23/035, C03B 9/00, C03B 11/08, B29C 33/10, B29C 37/00

(54) **Verfahren zum Erzeugen von Mikrostrukturen auf Glas- oder Kunststoffsubstraten nach der Heissformtechnologie und zugehöriges Formgebungswerkzeug**

(30) Priorität: 15.07.2000 DE 10034507
(71) Anmelder: Schott Glas, 55122 Mainz (DE); CARL-ZEISS-STIFTUNG trading as SCHOTT GLAS, 55122 Mainz (DE)
(72) Erfinder: Herzbach, Lars Christian, 64331 Weiterstadt (DE); Thiel, Steffen, 55286 Wörrstadt (DE); Postrach, Stefan, 55126 Mainz (DE)
(74) Vertreter: Fuchs Mehler Weiss & Fritzsche

(57) **Zusammenfassung**

Bei dieser Heißformtechnologie wird mittels eines Formgebungswerkzeuges, dessen Oberfläche entsprechend dem Negativ der zu erzeugenden Mikrostruktur strukturiert ist, die Struktur im viskos vorliegenden Glas oder Kunststoff durch Aufpressen des Formgebungswerkzeuges geformt und durch das Abheben desselben aus der Negativstruktur entformt.

Um das Formen der Struktur und deren Entformen zu unterstützen, sieht die Erfindung ein Formgebungswerkzeug vor, das aus einem zumindest teilweise porösen Grundkörper (1) besteht, der mit einer gasundurchlässigen Funktionsschicht (2) versehen ist, in der die Negativstruktur ausgeformt ist, derart, daß die Vertiefungen der Struktur bis an den porösen Grundkörper reichen. Durch Anlegen eines Unterdruckes wird das Formen unterstützt, weil sich die Vertiefungen der Struktur leichter und vollständiger mit dem geschmolzenen Glas bzw. Kunststoff füllen, wogegen durch Anlegen eines Überdruckes das Entformen unterstützt wird, indem das erstarrte Glas bzw. der Kunststoff sich leichter von den Wandungen der Vertiefungen lösen läßt.

## Beschreibung

Die Erfindung betrifft ein Verfahren zum Erzeugen von Mikrostrukturen auf Glas- oder Kunststoffsubstraten nach der Heißformtechnologie, bei dem mittels eines Formgebungswerkzeuges, dessen Oberfläche entsprechend dem Negativ der zu erzeugenden Mikrostruktur strukturiert ist, die Struktur im viskos vorliegenden Glas oder Kunststoff durch Aufpressen des Formgebungswerkzeuges geformt und durch Abheben des Formgebungswerkzeuges entformt wird.

Die Erfindung betrifft ferner ein Formgebungswerkzeug zum Erzeugen derartiger Strukturen nach der Heißformtechnologie.

Auf bestimmten, neuen technischen Gebieten werden Glas- oder Kunststoff-Substrate benötigt, deren Oberfläche eine Mikrostruktur aufweist. So wird beispielsweise ein mit Mikrostrukturen hoher Präzision versehenes Flachglas für Präzisionsanwendungen, insbesondere für Displays, Beleuchtungssysteme, optische und medizintechnische Anordnungen und für die Sensortechnik verwendet. Von besonderer Bedeutung sind dabei Displayscheiben von neueren Flachbildschirmgenerationen (Plasma Display Panel = PDP bzw. Plasma Addressed Liquid Crystal = PALC).

In diese sogenannten Kanalplatten sind Mikrokanal-Strukturen in Form von mehreren, parallel verlaufenden Kanälen eingebracht.

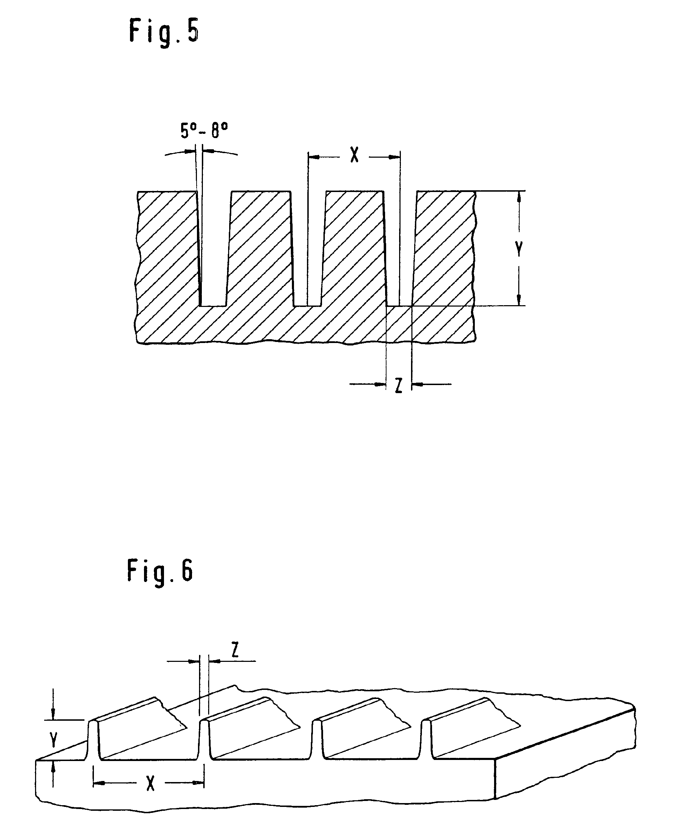

Eine derartige Kanalplatte ist ausschnittweise in Fig. 6 im stark vergrößerten Maßstab prinzipiell dargestellt. Die aus dieser Fig. ersichtliche kanalförmige Mikrostrukturierung muß kostengünstig und in großen Stückzahlen für verschiedene Displaygrößen (Bildschirmdiagonalen bis 55") erfolgen. In Abhängigkeit vom Bildschirmformat liegen die Strukturabmessungen in folgenden Bereichen: Stegabstand (Pitch) X = 150 - 650 µm, Steghöhe Y = 100 - 250 µm und Stegbreite Z = 20 - 50 µm. Für ein 42"-HiVision PDP-Display sind beispielsweise ca. 5760 Kanäle mit einem Teilungsabstand der Stege "X", dem sogenannten Pitch, von ca. 161 µm bei einer Steghöhe "Y" von 150 µm und einer Stegbreite "Z" von 30 µm mit Toleranzen von wenigen µm über ca. 520 mm Länge zu fertigen.

Bei anderen technischen Anwendungen liegt die Problematik entsprechend.

Es sind verschiedene Methoden zum Ausbilden der Mikrostrukturen bekannt geworden. Bei einer Methode werden Wandungen im Siebdruckverfahren in mehreren Schichtungen nacheinander auf das Substrat aufgetragen. Dieses Verfahren ist sehr aufwendung und teuer.

Bei einem anderen Prinzip wird die Substratoberfläche durch Sandstrahlen oder einen Schleifvorgang strukturiert. Beim Schleifen wird dabei ein hochpräzises Mehrscheiben-Schleifmodul verwendet, das mehrere auf einer gemeinsamen Spindel, hochpräzise durch Distanzringe axial beabstandet zueinander angeordnete Präzisionsschleifscheiben aufweist.

Es ist auch bekannt, die Mikrostrukturen im Wege der sogenannten Heißformgebung durch ein Formgebungswerkzeug mit entsprechend strukturierter Oberfläche auf plastifiziertem Glas oder Kunststoff aufzubringen. Dies kann sowohl durchgeführt werden bei direkt aus der Schmelze entnommenem Glas bzw. Kunststoff, dem sogenannten urformenden Heißformgebungsverfahren, als auch bei umformenden Heißformgebungsverfahren mit festen Substraten, wie sie beispielsweise in der DE 197 13 312 A1 beschrieben werden, bei denen eine lokale Erwärmung der strukturgebenden Oberfläche des Formgebungswerkzeuges zum Aufschmelzen der Substratoberfläche unmittelbar vor dem Formgebungsprozeß erfolgt.

Um vorbestimmte Strukturen auf dem Substrat aufzubringen, muß die Oberfläche des Formgebungswerkzeuges das Negativ dieser Strukturen aufweisen. Für das beschriebene Anwendungsbeispiel einer PALC-Kanalplatte ist die zur Kanalstruktur nach Fig. 6 negative Oberflächenstruktur in Fig. 5 dargestellt.

Während dem Formgebungsvorgang paßt sich das niedrig viskose Glas (oder Kunststoff) den Strukuren des Formgebungswerkzeuges an. Bei der Auswahl des hierfür verwendeten Formgebungswerkstoffes kommt es dabei zu einem Kompromiss. Zum einen muß das Benetzungsverhalten der schmelzflüssigen Phase auf dem Formgebungswerkstoff so gut sein, daß das Glas bzw. der Kunststoff möglichst vollständig in die Strukturen des Formgebungswerkstoffs eindringt, andererseits muß sich das zu strukturierende Glas oder der Kunststoff auch wieder von dem Formgebungsmaterial nach der Ausbildung der gewünschten µm-Struktur gut trennen lassen, d.h. muß ein geringes Benetzungsverhalten haben. Beim Einsatz von sehr gut benetzenden Werkstoffen kommt es an sich zu einer guten Ausbildung der µm-Strukturen. Bei dem Trennvorgang kann es jedoch aufgrund von Klebeeffekten zu einem Ausbrechen von den gebildeten Strukturen kommen.

Bei schlecht benetzenden Werkstoffen kann es wiederum zu einer schlechten Ausbildung der geforderten µm-Geometrie kommen. Die Wahrscheinlichkeit von Ausbrüchen der geformten µm-Strukturen ist andererseits wieder gering.

Es ist bislang noch nicht gelungen, eine Werkstoffkombination zu finden, die den vorstehenden gegensätzlichen Anforderungen in optimaler Weise genügt, d.h. die gewährleistet, daß beim Einpressen des Formgebungswerkzeuges in das Substrat die Negativstruktur vollständig ausgefüllt wird und daß die dabei entstehende Struktur beim Entfernen des Formgebungswerkzeuges, d.h. beim Ausformen der Struktur, nicht mehr ausbricht.

Der Erfindung liegt die Aufgabe zugrunde, das eingangs bezeichnete Verfähren so zu führen bzw. das zugehörige Formgebungswerkzeug so auszubilden, daß die Negativstrukturen des Formgebungswerkzeuges möglichst vollständig mit geschmolzenem Glas bzw. Kunststoff gefüllt werden und die geformten Strukturen beim Entformen möglichst unverletzt bleiben.

Die Lösung dieser Aufgabe gelingt bei einem Verfahren zum Erzeugen von Mikrostrukturen auf Glas- oder Kunststoffsubstraten nach der Heißformtechnologie, bei dem mittels eines Formgebungswerkzeuges, dessen Oberfläche entsprechend dem Negativ der zu erzeugenden Mikrostruktur strukturiert ist, die Struktur im viskos vorliegenden Glas oder Kunststoff durch Aufpressen des Formgebungswerkzeuges geformt und durch Abheben des Formgebungswerkzeuges entformt wird, gemäß der Erfindung durch die Anwendung eines Formgebungswerkzeuges mit einem zumindest teilweise porösen Grundwerkstoff mit offener Porenstruktur, das an den Strukturen während des Formens der Struktur mit Unterdruck und während des Entformens mit Überdruck beaufschlagt wird.

Hinsichtlich des zugehörigen Formgebungswerkzeuges zum Erzeugen von Mikrostrukturen auf Glas- oder Kunststoffsubstraten nach der Heißformtechnologie, mit einem Grundkörper, auf dem eine Funktionsschicht aufgebracht ist, die entsprechend dem Negativ der zu erzeugenden Mikrostruktur strukturiert ist, gelingt die Lösung der Aufgabe erfindungsgemäß dadurch, daß der Grundkörper zumindest teilweise aus einem porösen Werkstoff mit offener Porenstruktur besteht und mit einer Funktionsschicht aus einem gasundurchlässigen Material versehen ist, in der die Negativstruktur ausgebracht ist, derart, daß der Grund der Vertiefungen der Struktur durch den Werkstoff des Grundkörpers gebildet ist, sowie dadurch, daß dem der Funktionsschicht abgewandten Teil des porösen Grundkörpers Anordnungen zum Zuführen sowie Absaugen von Luft zugeordnet sind.

Bei dem erfindungsgemäßen Verfahren sowie Formgebungswerkzeug wird somit in den Vertiefungen der Negativstruktur des Formgebungswerkzeuges ein Unter- oder Überdruck eingestellt, indem am Grund der Vertiefungen Luft angesaugt oder eingeblasen wird.

Das Ansaugen der Luft, der Unterdruck, unterstützt das Ausfüllen der Strukturen mit Glas bzw. Kunststoff, wogegen das Einblasen der Luft, im speziellen Druckluft, der Überdruck, den Entformungsvorgang unterstützt.

Gemäß einer Ausgestaltung der Erfindung wird das Verfahren so geführt, daß das Glas oder der Kunststoff direkt der Schmelze entnommen wird.

Alternativ dazu kann das Verfahren so geführt werden, daß das Glas oder der Kunststoff als festes Substrat vorliegt und das Formgebungswerkzeug unmittelbar vor dem Formen der Mikrostruktur lokal erhitzt wird unter Plastifizierung des Substratmaterials im zu strukturierenden Bereich.

Im zweiten Fall wird zwar zusätzliche Energie zum Aufschmelzen des in fester Form vorliegenden Glases bzw. Kunststoff benötigt, jedoch wird bei bestimmten Anwendungsfällen die einfachere Handhabung des Substratmaterials und die Unabhängigkeit von der Schmelze als vorteilhaft empfunden.

Gemäß einer Ausgestaltung der Erfindung ist das Formgebungswerkzeug zweckmäßig so ausgestaltet, daß der Grundkörper vollständig aus einem porösen Werkstoffsystem mit offener Porenstruktur besteht.

Alternativ dazu, je nach Wirtschaftlichkeit und technischer Durchführbarkeit, kann das Formgebungswerkzeug so ausgestaltet sein, daß nur der, der Funktionsschicht benachbarte Teil des Grundkörpers aus einem porösen Werkstoff mit offener Porenstruktur besteht, während der verbleibende Teil des Grundkörpers gasundurchlässig ist.

Gemäß einer weiteren Ausgestaltung der Erfindung ist das Formgebungswerkzeug vorteilhaft so gestaltet, daß die Seitenwandungen des porösen Grundkörpers gasundurchlässig ausgebildet sind.

Dadurch steht der Unter- bzw. Überdruck voll am Grund der Vertiefungen der Struktur an, d.h. entfaltet allein dort seine Wirkung, so daß das Formen und Entformen der Struktur optimal gefördert wird.

Je nach Anwendungsfall ist das Formgebungswerkzeug als Preßwalze oder ebenes Preßwerkzeug ausgebildet.

Anhand von zwei in den Zeichnungen dargestellten Ausführungsbeispielen wird die Erfindung näher beschrieben.

### Es zeigen:

- Fig. 1: in einer schematisierten und idealisierten Längsschnitt-Darstellung durch das Formgebungswerkzeug eine erste Ausführungsform mit einem porösen Werkstoff, der den gesamten Grundkörper des ^Formgebungswerkzeuges bildet, und der von einer strukturierten Funktionsschicht bedeckt ist,
- Fig. 2: in einer Schnitt-Darstellung entsprechend Fig. 1 den Zustand des Formgebungswerkzeuges beim Formen der Struktur, unterstützt durch das Anlegen eines Unterdruckes an den Vertiefungen der Struktur,
- Fig. 3: in einer Schnitt-Darstellung entsprechend Fig. 1 den Zustand des Formgebungswerkzeuges beim Entformen der Struktur, unterstützt durch das Anlegen eines Überdruckes an die Vertiefungen der Struktur,
- Fig. 4: in einer Schnitt-Darstellung entsprechend Fig. 1 eine zweite Ausführungsform des erfindungsgemäßen Formgebungswerkzeuges, bei der der Grundkörper nur zum Teil aus einem porösen Werkstoff besteht,
- Fig. 5: die an sich bekannte Strukturierung in der Funktionsschicht des Formgebungswerkzeuges als Negativ der in einer Kanalplatte zu erzeugenden Struktur, und
- Fig. 6: den schematischen bekannten Aufbau einer solchen Kanalplatte.

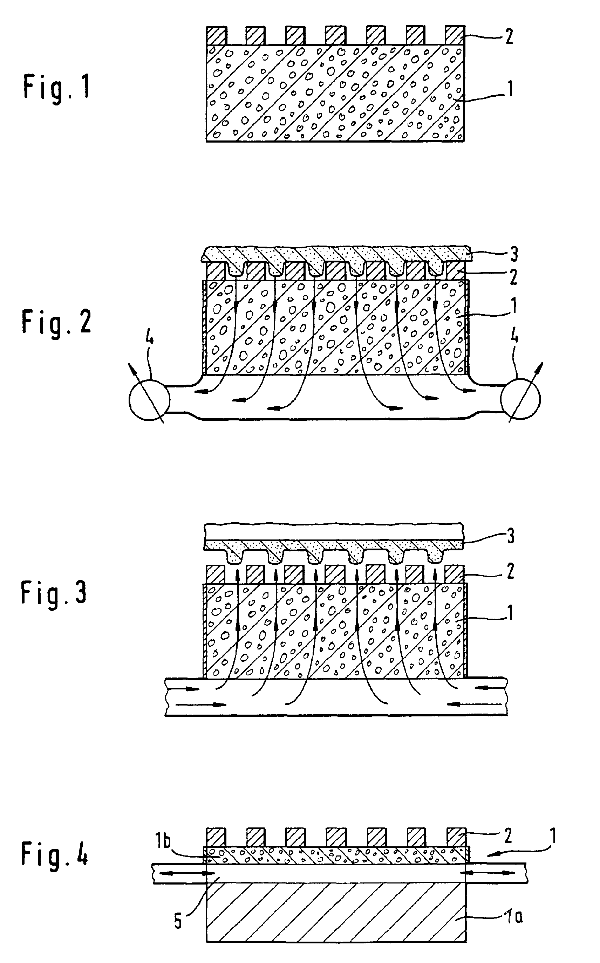

In Fig. 1 ist das Grundprinzip des erfindungsgemäß aufgebauten Formgebungswerkzeuges schematisch an einer Ausschnitts-Darstellung gezeigt. Bei der Ausführungsform nach Fig. 1 besteht der Grundwerkstoff 1 aus einem porösen Material mit offener Porenstruktur, das eine ausreichende Luft- bzw. Gasdurchlässigkeit aufweist. Die Erzielung der Porenstruktur kann z.B. durch einen Sinterprozeß erfolgen. Der poröse Grundwerkstoff kann metallischer oder vorzugsweise keramischer Natur sein.

Prinzipielle Unterschiede in der fertigungstechnischen Bearbeitung verschiedener Werkzeugformen gibt es nicht. Im Rahmen der hier beschriebenen Heißformgebungsverfahren sind dies typischerweise rotationssymmetrische Walzen und ebene Preßstempel bzw. -formen. Lediglich die Postionierung/Aufspannung der zu strukturierenden Werkzeuge ist deren Form anzupassen.

Auf dem Grundwerkstoff 1 ist die Funktionsschicht 2, d.h. die strukturierte Oberfläche des Formgebungswerkzeuges aufgebracht, die nicht porös ist bzw. keine offene Porenstruktur aufweist. Die Strukturierung ist dabei symbolisch durch die Rechteckkonturen dargestellt. Für die Strukturierung von Glassubstraten zu Kanalplatten nach Fig. 6 hat diese Struktur beispielsweise eine Kontur entsprechend der bereits beschriebenen Fig. 5.

Als Werkstoff für die Funktionsschicht können sowohl hochtemperaturbeständige Legierungen auf Fe-, Ni- und Co-Basis (z.B.: Inconel xx, Incoloy xx, Nicrofer xx, Nimonic xx, Udimet xx, PM 1000, PM 2000, Deloro alloys xx, Stellite xx, Tribaloy xx, Hastelloy xx, Haynes xx), keramische Werkstoffe wie z.B. Si3N4, SiC, SiO2, A1203, ZrO2, B4C, BN, BCN, WC, TiC, TiN, Ti2N, TiB2, TiCN, TiAIN, AIN, AION, CrN, CrON, ZrN, TaC, Edelmetalle und -legierungen (Pt, Au, Ir, Rh, Os, Ru, Re) und Refraktärmetalle (W, Hf, Ta, Hb, Mo) verwendet werden.

Das Aufbringen der Funktionsschicht bzw. ihre Negativ-Mikrostrurierung kann nach verschiedenen fertigungstechnischen Verfahren erfolgen. Dabei sind in bezug auf das Strukturierungsverfahren bzw. die erzeugte Struktur folgende Hauptanforderungen zu erfüllen:
- exakte geometrische Negativabbildung der geforderten Struktur (großflächig ≤ 1 m²)
- hohe Ebenheit und geringe Rauhigkeit der Werkzeugoberfläche (Vermeidung der Abbildung von Aufrauhungen im Glas bzw. im Kunststoff).
- glatte Flankenflächen ohne Hinterschneidungen (Gewährleistung der Entformbarkeit)

Die nachfolgend aufgeführten Verfahren erfüllen die Hauptanforderungen und kommen vorzugsweise zur Strukturierung der Werkzeuge in Frage:
- **Funkenerosion:** Mit der Technologie des Bahnerodierens ist die Bearbeitung großflächiger Werkzeuge möglich. Scheiben- und Stiftelektroden erzeugen die Strukturen am Werkzeug.
- **Schleifverfahren:** Die Bearbeitung der Werkzeuge erfolgt mit entsprechend strukturierten Schleifscheiben.
- **Mikrozerspanung:** Diamant-Zerspanwerkzeuge werden zur Bearbeitung eingesetzt, sind aber in bezug auf die zu bearbeitenden Werkstoffe sehr eingeschränkt (hochtemperaturfeste Legierungen sind für eine zerspanende Bearbeitung ungeignet).
- **Laserbearbeitung:** Durch den Einsatz extrem kurzer Laserpulse im Femtosekundenbereich werden die Strukturen im Werkeug erzeugt.

Auch andere Verfahren, die die Forderungen erfüllen kommen in Frage.

Während des Heißformgebungsprozesses wird das poröse, mit einer strukturierten Funktionsschicht versehende Formwerkzeug folgendermaßen verwendet:

Während der Ausbildung der µm-Strukturen beim Einpressen des Formgebungswerkzeuges in das viskose Glas oder Kunststoff wird durch die offenen Poren des Formgebungswerkzeuges Luft angesaugt, so daß an der Grenzfläche zum Glas oder Kunststoff im Raum zwischen den Strukturwänden (Nuten) ein Unterdruck erzeugt wird. Die Glas-Kunststoffschmelze 3 wird dadurch infolge der Sogwirkung in die Nuten hineingezogen und das Ausbilden der Strukturen unterstützt. Dieser Schritt ist in Fig. 2 dargestellt. Mindestens eine, vorzugsweise zwei an das poröse Grundmaterial 1 an entsprechende Öffnungen an einen umgebenden Raum angelegte Pumpen 4 sorgen für den notwendigen Unterdruck. Die seitlichen Randbereiche des porösen Grundmaterials 1 sind dabei gasdicht versiegelt, damit der Unterdruck, d.h. die Sogwirkung voll im Nutbereich wirken kann.

Nach Ausbildung der Strukturen in der erstarrenden Schmelze 3 wird während des anschließenden Trennvorgangs Gas (Luft) durch die offenen Poren des Formgebungswerkstoffs an die Grenzfläche zum Glas oder Kunststoff geleitet. Dieser Vorgang erleichtert das Entformen, d.h. das Ablösen des Glases bzw. des Kunststoffes von dem Formgebungsswerkzeug. Dieser Schritt ist in Fig. 3 dargestellt. Zu diesem Entformen wird an entsprechende Öffnungen des Formgebungswerkzeuges oder an einem umgebenden Raum Druckluft angelegt, was durch die Pfeile angedeutet ist. Die Seitenwände des Werkzeuges sind dabei ebenfalls gasdicht versiegelt.

Während bei der Ausführungsform nach den Figuren 1 bis 3 das Formgebungswerkzeug aus einem vollständig porösen Grundwerkstoff 1 besteht, ist in der Fig. 4 eine Ausführungsform dargestellt, bei der der Grundwerkstoff nur teilweise porös ist. Das Grundmaterial besteht dabei aus einem nicht porösen Werkstoff 1 a und nur benachbart der Funktionsschicht 2 ist eine poröse Schicht 1 b mit offenen Porenstrukturen angebracht. Über einen Kanal 5 kann ein Unterdruck bzw. ein Überdruck bei der Formgebung bzw. bei dem Entformen angelegt werden, wie es anhand der Figuren 2 und 3 bereits beschrieben wurde.

## Patentansprüche

1. Verfahren zum Erzeugen von Mikrostrukturen auf Glas- oder Kunststoffsubstraten nach der Heißformtechnologie, bei dem mittels eines Formgebungswerkzeuges, dessen Oberfläche entsprechend dem Negativ der zu erzeugenden Mikrostruktur strukturiert ist, die Struktur im viskos vorliegenden Glas oder Kunststoff durch Aufpressen des Formgebungswerkzeuges geformt und durch Abheben des Formgebungswerkzeuges entformt wird, **gekennzeichnet durch** die Anwendung eines Formgebungswerkzeuges mit einem zumindest teilweise porösen Grundwerkstoff mit offener Porenstruktur, das in den Strukturen während des Formens der Struktur mit Unterdruck und während des Entformens mit Überdruck beaufschlagt wird.

2. Verfahren nach Anspruch 1, **dadurch gekennzeichnet, daß** das Glas oder der Kunststoff direkt der Schmelze entnommen werden.

3. Verfahren nach Anspruch 1, **dadurch gekennzeichnet, daß** das Glas oder der Kunststoff als festes Substrat vorliegt und das Formgebungswerkzeug unmittelbar vor dem Formen der Mikrostruktur lokal erhitzt wird unter Plastifizierung des Substratmaterials im zu strukturierenden Bereich.

4. Formgebungswerkzeug zum Erzeugen von Mikrostrukturen auf Glas- oder Kunststoffsubstraten nach der Heißformtechnologie, mit einem Grundkörper, auf dem eine Funktionsschicht aufgebracht ist, die entsprechend dem Negativ der zu erzeugenden Mikrostruktur strukturiert ist, **dadurch gekennzeichnet, daß** der Grundkörper (1) zumindest teilweise aus einem porösen Werkstoff mit offener Porenstruktur besteht und mit einer Funktionsschicht (2) aus einem gasundurchlässigen Material versehen ist, in der die Negativstruktur ausgebracht ist, derart, daß der Grund der Vertiefungen der Struktur durch den Werkstoff des Grundkörpers gebildet ist, und daß dem der Funktionsschicht (2) abgewandten Teil des porösen Grundkörpers (1, 1 a) Anordnungen (4, 5) zum Zuführen sowie Absaugen von Luft zugeordnet sind.

5. Formgebungswerkzeug nach Anspruch 4, **dadurch gekennzeichnet, daß** der Grundkörper (1) vollständig aus einem porösen Werkstoff mit offener Porenstruktur besteht.

6. Formgebungswerkzeug nach Anspruch 4, **dadurch gekennzeichnet, daß** nur der, der Funktionsschicht benachbarte Teil (1 b) des Grundkörpers (1) aus einem porösen Werkstoff mit offener Porenstruktur besteht, während der verbleibende Teil (1 a) des Grundkörpers (1) gasundurchlässig ist.

7. Formgebungswerkzeug nach Anspruch 5 oder 6, **dadurch gekennzeichnet, daß** die Seitenwandungen des porösen Grundkörpers (1, 1 b) gasundurchlässig ausgebildet sind.

8. Formgebungswerkzeug nach einem der Ansprüche 1 bis 7, **dadurch gekennzeichnet, daß** das Formgebungswerkzeug als Preßwalze oder ebenes Preßwerkzeug ausgebildet ist.
